# EUROPÄISCHE PATENTSCHRIFT

(11) **EP 3 899 222 B1**
(45) Veröffentlichungstag und Bekanntmachung des Hinweises auf die Patenterteilung: **13.09.2023**
(21) Anmeldenummer: 19797195.5
(22) Anmeldetag: 23.10.2019
(51) Int. Cl.: F01N 13/00, F01N 13/18

(54) **STUTZEN UND SENSORSYSTEM**
CONNECTION PIECE AND SENSOR SYSTEM
TUBULURE ET SYSTÈME DE CAPTEUR

(30) Priorität: 17.12.2018 DE 102018221893
(43) Veröffentlichungstag der Anmeldung: 27.10.2021
(73) Patentinhaber: Robert Bosch GmbH, 70442 Stuttgart (DE)
(72) Erfinder: KLOOS, Manuel, 70191 Stuttgart (DE); RUSS, Sebastian, 71277 Rutesheim (DE)
(86) Internationale Anmeldenummer: PCT/EP2019/078885
(87) Internationale Veröffentlichungsnummer: WO 2020/126169

(56) Entgegenhaltungen:
- WO-A1-2004/109270
- DE-A1-102013 222 594
- US-A- 5 616 825
- US-A- 5 711 863

## Beschreibung

### Stand der Technik

In der Abgassensorik im Kraftfahrzeugbereich werden Sensoren unterflur in den Abgasstrang von Fahrzeugen eingebaut. Dafür wird zumeist ein Außengewinde an dem Sensor in einen am Abgasstrang eingeschweißten Stutzen mit Innengewinde geschraubt. Es soll eine gasdichte Verbindung beider Schraubpartner entstehen, um das Austreten von Abgasen zu vermeiden.

Derartige Montageanordnungen sind beispielsweise in der DE 10 2013 222594 A1, der WO 2004/109270 A1, der US 5 711 863 A und der US 5 616 825 A offenbart.

Durch das Einschweißen des Gewindestutzens in den meist aus einem runden Rohr bestehenden Abgasstrang verzieht sich dieser. Die Schweißnaht verläuft nicht auf einer Höhe um den Gewindestutzen, sondern in einer Wellenform. Dadurch entsteht der Schweiß-Wärmeeintrag in unterschiedlichen Bereichen des Gewindestutzens. Die Resultierenden Wärmedehnungen verformen den Stutzen nachhaltig. Die Verformung (im Folgenden auch "Warping" genannt) beeinflusst den Rundlauf von Gewinde und potentiellen Dichtstellen.

Trotz der zahlreichen Vorteile der aus dem Stand der Technik bekannten Gewindestutzen und Verfahren zum Befestigen von Abgassensoren beinhalten diese noch Verbesserungspotenzial. Die Schraubverbindung zwischen Stutzen und Abgassensor soll initial eine geschlossene Dichtfläche mit hohem Dichtdruck beinhalten. Zusätzlich sorgt eine möglichst breite Dichtung für eine hohe Robustheit gegen korrosive Unterwanderung. Beide Anforderungen laufen konträr, da eine breitere Dichtfläche bei identischer Andruckkraft zu geringen Dichtdrücken führt. Zusätzlich führt eine breite Dichtfläche zu kleinen elastoplastischen Deformationen des Dichtbereiches. Dadurch wirken sich Toleranzabweichungen, insbesondere Rundlauf und Winkelabweichungen der beiden Dichtflächen, stärker aus. Eine breite Dichtfläche führt daher zu einer Abnahme der Dichtwirkung bei Toleranzabweichungen, wie sie insbesondere beim Warping durch Einschweißen vorkommen.

### Offenbarung der Erfindung

Es werden daher ein Stutzen gemäß Anspruch 1 und ein Sensorsystem gemäß Anspruch 5 vorgeschlagen, welche die Nachteile bekannter Stutzen zumindest weitgehend vermeiden und die insbesondere eine breitere Dichtfläche mit größerem Dichtdruck erlauben.

Ein erfindungsgemäßer Stutzen für eine Montage an einem Abgasstrang einer Brennkraftmaschine weist ein Innengewinde auf. Das Innengewinde ist zum Eingreifen in ein Außengewinde eines Abgassensors ausgebildet. Der Stutzen weist weiterhin mindestens eine erste Dichtfläche zur Aufnahme einer Dichtung auf. Die erste Dichtfläche weist eine Hinterschneidung auf.

Im Gegensatz zu herkömmlichen flachen oder gewinkelten Dichtsitzen führt der hier gezeigte Dichtsitz mit einem Hinterschnitt zu einer initialen Linienauflage, die sich mit zunehmender Klemmkraft hervorgerufen durch Anzugsmoment der Schraubverbindung verbreitert. Durch den entstehenden Gradient im Anpressdruck im Dichtsitz wird eine hohe plastische Deformation und initiale Dichtheit an der Innenanlage, gemeinsam mit einem breiten Dichtsitz und somit hoher Robustheit gegen korrosive Angriffe ermöglicht.

Bevorzugt ist der Stutzen ausgebildet, mit einem Abgasstrang einer Brennkraftmaschine verschweißt zu werden.

Erfindungsgemäß ist die erste Dichtfläche an das Innengewinde angrenzend angeordnet. Dadurch wird ein Spalt zwischen den Fügepartnern verkleinert.

Weiter erfindungsgemäß erstreckt sich die erste Dichtfläche bezüglich einer Ebene senkrecht zur Gewindeachse des Innengewindes in einem Winkel von 0,25° bis 10,0°. Die erste Dichtfläche kann sich bezüglich einer Ebene senkrecht zur Gewindeachse des Innengewindes in einem Winkel von 0,5° bis 5,0° erstrecken. Die erste Dichtfläche kann sich bezüglich einer Ebene senkrecht zur Gewindeachse des Innengewindes in einem Winkel von 1,0° bis 3,0° erstrecken. So wird in allen Bauteiltoleranzlagen, insbesondere Winkeltoleranzen der Dichtflächen, ein Erstkontakt an der Innenanlage gewährleistet und gleichzeitig eine schnelle Verbreiterung der Dichtfläche mit dem Dichtdruck ermöglicht.

Bei einer Weiterbildung weist die erste Dichtfläche einen Außendurchmesser von 15 mm bis 50 mm und bevorzugt 20 mm bis 40 mm auf.

Der Abgassensor kann eine Lambdasonde, ein Partikelsensor, ein Stickstoffoxidsensor, ein Drucksensor, ein Heißfilmluftmassenmesser, Temperatursensor oder ein Feuchtesensor sein.

Es wird weiterhin ein Sensorsystem vorgeschlagen. Das Sensorsystem umfasst einen Stutzen nach den obigen Ausführungen und/oder einen Abgassensor nach den obigen Ausführungen.

Unter einem Stutzen ist im Rahmen der vorliegenden Erfindung ein kurzes Rohrstück zu verstehen, das ausgebildet ist an einem anderen (Hohl-)Körper angesetzt zu sein.

Die Ausdruck "erste" und "zweite" dienen lediglich der begrifflichen Unterscheidung der jeweiligen Bauteile bzw. Merkmale und sollen nicht irgendeine Gewichtung, Bedeutung oder besondere Reihenfolge von Bauteilen oder Merkmalen angeben.

Ein Grundgedanke der vorliegenden Erfindung ist, die Vorteile eines abgewinkelten Dichtsitzes, wie beispielsweise Liniendichtung, hohe Dichtdrücke und elasto-plastische Deformationen, und eines flachen Dichtsitzes, wie beispielswiese breite Dichtfläche und Reduzierung der Klemmkraftabnahme bei Temperaturerhöhung, zu vereinen. Dies wird durch einen Abfall bzw. Neigung der ersten Dichtflächen in kleinem Winkel mit zunehmendem Radius erreicht. Der Erstkontakt entsteht somit am Innenradius und verbreitert sich mit zunehmender Klemmkraft nach außen hin. Der ideale Winkel ist von Klemmkraft, Werkstoff-Kennwerten, Bauteiltoleranzen, und gewünschter Dichtlänge sowie Dichtdruck abhängig.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
Figur 1 eine Querschnittsansicht eines Stutzens gemäß einer Ausführungsform der vorliegenden Erfindung,
Figur 2 eine vergrößertes Detail des Stutzens,
Figur 3 eine Querschnittsansicht eines Sensorsystems und
Figur 4 eine vergrößertes Detail des Sensorsystems.

### Ausführungsformen der Erfindung

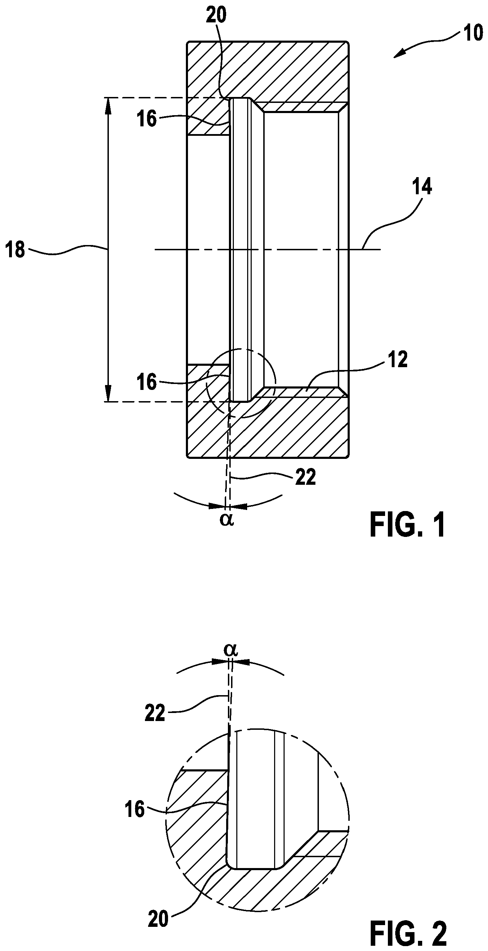

Figur 1 zeigt eine Querschnittsansicht eines Stutzens 10 gemäß einer Ausführungsform der vorliegenden Erfindung. Der Stutzen 10 ist im Wesentlichen zylindrisch ausgebildet. Der Stutzen 10 ist zur Montage an einem Abgasstrang einer Brennkraftmaschine ausgebildet. Zu diesem Zweck wird der Stutzen 10 mit dem Abgasstrang verschweißt. Der Stutzen 10 weist ein Innengewinde 12 auf, das um eine Gewindeachse 14 ausgebildet ist. Der Stutzen 10 weist weiterhin mindestens eine erste Dichtfläche 16 auf. Die erste Dichtfläche 16 ist an das Innengewinde 12 angrenzend angeordnet. Die erste Dichtfläche 16 weist einen Außendurchmesser 18 von 15 mm bis 50 mm und bevorzugt 20 mm bis 40 mm auf, beispielsweise 22,5 mm. Die erste Dichtfläche 16 weist eine Hinterschneidung 20 auf.

Figur 2 zeigt ein vergrößertes Detail des Stutzens 10 im Bereich der ersten Dichtfläche 16. Zur Realisierung der Hinterschneidung 20 erstreckt sich die erste Dichtfläche 16 bezüglich einer Ebene 22 senkrecht zur Gewindeachse 14 des Innengewindes 12 in einem Winkel α von 0,25° bis 10,0°, bevorzugt von 0,5° bis 5,0°, beispielsweise 2,0°. Die erste Dichtfläche 16 neigt sich somit relativ zu einer radialen Richtung bezüglich der Gewindeachse 14 des Innengewindes 12 gesehen.

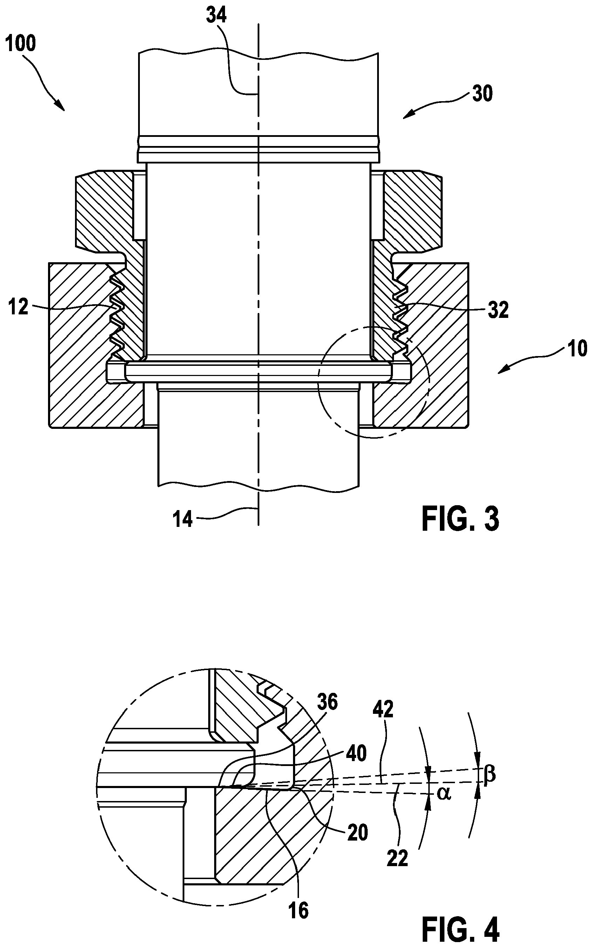

Figur 3 zeigt eine Querschnittsansicht eines Sensorsystems 100 gemäß einer Ausführungsform der vorliegenden Erfindung. Das Sensorsystem 100 umfasst den Stutzen 10 gemäß der Darstellung der Figuren 1 und 2. Das Sensorsystem 100 umfasst weiterhin einen Abgassensor 30. Der Abgassensor 30 ist zur Montage an dem Stutzen 10 ausgebildet. Der Abgassensor 30 ist eine Lambdasonde, ein Partikelsensor, ein Stickstoffoxidsensor, ein Drucksensor, ein Heißfilmluftmassenmesser, ein Temperatursensor oder ein Feuchtesensor. Figur 3 zeigt den Stutzen 10 und den Abgassensor 30 in einem miteinander verbundenen Zustand. Der Abgassensor 30 weist ein Außengewinde 32 auf, das um eine Gewindeachse 34 ausgebildet ist. Der Abgassensor 30 weist weiterhin mindestens eine zweite Dichtfläche 36 auf. Die zweite Dichtfläche 36 ist an das Außengewinde 32 angrenzend angeordnet. Die zweite Dichtfläche 36 liegt auf der ersten Dichtfläche 16 auf. Entsprechend wird die Dichtung des Abgassensors 30 von der zweiten Dichtfläche 36 gebildet. Alternativ kann eine nicht näher gezeigte separate Dichtung des Abgassensors 30 zwischen der ersten Dichtfläche 16 und der zweiten Dichtfläche 36 angeordnet sein. Eine solche Dichtung kann Teil des Abgassensors 30 und somit mit diesem einstückig ausgebildet sein oder ein separates Bauteil, das auf dem Abgassensor 30 in einem separaten Montageschritt angeordnet wird. Die Dichtung ist in einem solchen Fall aus Metall, Stahl oder einer Legierung hergestellt. Die zweite Dichtfläche 36 weist eine Hinterschneidung 40 auf.

Figur 4 zeigt ein vergrößertes Detail des Sensorsystems 100 im Bereich der Verbindung zwischen dem Stutzen 10 und dem Abgassensor 30. Zur Realisierung der Hinterschneidung 40 erstreckt sich die zweite Dichtfläche 36 bezüglich einer Ebene 42 senkrecht zur Gewindeachse 34 des Außengewindes 32 in einem Winkel β von 0,25° bis 10,0°, bevorzugt von 0,5° bis 5,0°, beispielsweise 2,0°. Die zweite Dichtfläche 36 neigt sich somit relativ zu einer radialen Richtung bezüglich der Gewindeachse 34 des Außengewindes 32 gesehen. Bei dem gezeigten Ausführungsbeispiel entfernen sich die Dichtflächen 16, 36 voneinander mit zunehmender radialer Abmessung nach außen.

Im Gegensatz zu herkömmlichen flachen oder gewinkelten Dichtsitzen führt der hier gezeigte Dichtsitz mit einem Hinterschnitt einer oder beider Dichtflächen zu einer initialen Linienauflage, die sich mit zunehmender Klemmkraft hervorgerufen durch Anzugsmoment der Schraubverbindung verbreitert. Durch den entstehenden Gradient im Anpressdruck im Dichtsitz wird eine hohe plastische Deformation und initiale Dichtheit an der Innenanlage, gemeinsam mit einem breiten Dichtsitz und somit hoher Robustheit gegen korrosive Angriffe ermöglicht. Der Abfall einer oder beider Dichtflächen in kleinem Winkel mit zunehmendem Radius bewirkt, dass der Erstkontakt somit am Innenradius entsteht und sich mit zunehmender Klemmkraft nach außen hin verbreitert. Der ideale Winkel ist von Klemmkraft, Werkstoff-Kennwerten, Bauteiltoleranzen, und gewünschter Dichtlänge sowie Dichtdruck abhängig. Dabei ergibt sich beispielsweise eine Verbreiterung der Dichtung in Nennlage um Faktor 2,5 zu einer Dichtung mit einem 15° nach innen abfallenden Dichtsitz, sowie eine Verringerung des durch maximal erlaubten Warpings entstehenden Spalts um 80% im Vergleich zu einem vergleichbaren flachen Dichtsitz.

Es wird explizit betont, dass der erfindungsgemäße Stutzen 10 gemäß der Darstellung der Figuren 1 und 2 oder der erfindungsgemäße Abgassensor 30 gemäß den Darstellungen der Figuren 3 und 4 durch einen herkömmlichen Stutzen bzw. Abgassensor ohne jeweils Hinterschneidung an ihrer Dichtfläche bei dem Sensorsystem 100 ersetzt sein kann.

## Patentansprüche

1. Stutzen (10) für eine Montage an einem Abgasstrang einer Brennkraftmaschine, wobei der Stutzen (10) ein Innengewinde (12) aufweist, das um eine Gewindeachse (14) ausgebildet ist, wobei das Innengewinde (12) zum Eingreifen in ein Außengewinde (32) eines Abgassensors (30) ausgebildet ist, wobei der Stutzen (10) weiterhin mindestens eine erste Dichtfläche (16) zur Aufnahme einer Dichtung aufweist, wobei die erste Dichtfläche (16) eine Hinterschneidung (20) aufweist, wobei die erste Dichtfläche (16) auf der in Einschraubrichtung des Innengewindes gelegenen axialen Seite an das Innengewinde (12) angrenzend angeordnet ist, **dadurch gekennzeichnet, dass** sich die erste Dichtfläche bezüglich einer Ebene (22) senkrecht zur Gewindeachse (14) des Innengewindes (12) in einem Winkel (α) von 0,25° bis 10,0° erstreckt, sodass die Dichtfläche (16) in radialer Richtung nach außen in Einschraubrichtung des Innengewindes (12) abfällt.

2. Stutzen (10) nach Anspruch 1, wobei sich die erste Dichtfläche (16) bezüglich einer Ebene (22) senkrecht zur Gewindeachse (14) des Innengewindes (12) in einem Winkel (α) von 0,5° bis 5,0° erstreckt.

3. Stutzen (10) nach einem der Ansprüche 1 oder 2, wobei sich die erste Dichtfläche (16) bezüglich einer Ebene (22) senkrecht zur Gewindeachse (14) des Innengewindes (12) in einem Winkel (α) von 1,0° bis 3,0° erstreckt.

4. Stutzen (10) nach einem der Ansprüche 1 bis 3, wobei die erste Dichtfläche (16) einen Außendurchmesser (18) von 15 mm bis 50 mm und bevorzugt 20 mm bis 40 mm aufweist.

5. Sensorsystem (100) umfassend einen Stutzen (10) nach einem der Ansprüche 1 bis 4 und einen Abgassensor (30).

## Claims

1. Connection piece (10) for mounting on an exhaust system of an internal combustion engine, wherein the connection piece (10) has an internal thread (12), which is formed about a thread axis (14); the internal thread (12) is designed to engage in an external thread (32) of an exhaust gas sensor (30); the connection piece (10) also has at least one first sealing surface (16) for receiving a seal; the first sealing surface (16) has an undercut (20); the first sealing surface (16) is arranged adjacent to the internal thread (12) on the axial side in the screw-in direction of the internal thread, **characterized in that** the first sealing surface extends at an angle (α) of 0.25° to 10.0° with respect to a plane (22) perpendicular to the thread axis (14) of the internal thread (12), so that the sealing surface (16) slopes down towards the outside in the radial direction in the screw-in direction of the internal thread (12).

2. Connection piece (10) according to Claim 1, wherein the first sealing surface (16) extends at an angle (α) of 0.5° to 5.0° with respect to a plane (22) perpendicular to the thread axis (14) of the internal thread (12).

3. Connection piece (10) according to either of Claims 1 and 2, wherein the first sealing surface (16) extends at an angle (α) of 1.0° to 3.0° with respect to a plane (22) perpendicular to the thread axis (14) of the internal thread (12).

4. Connection piece (10) according to one of Claims 1 to 3, wherein the first sealing surface (16) has an external diameter (18) of 15 mm to 50 mm and preferably 20 mm to 40 mm.

5. Sensor system (100) comprising a connection piece (10) according to one of Claims 1 to 4 and an exhaust gas sensor (30).

## Revendications

1. Raccord (10) destiné à être monté sur une ligne de gaz d'échappement d'un moteur à combustion interne, le raccord (10) comportant un filetage intérieur (12) qui est formé autour d'un axe de filetage (14), le filetage intérieur (12) étant conçu pour s'engrener dans un filetage extérieur (32) d'un capteur de gaz d'échappement (30), le raccord (10) comportant en outre au moins une première surface d'étanchéité (16) destinée à recevoir une garniture d'étanchéité, la première surface d'étanchéité (16) comportant une contre-dépouille (20), la première surface d'étanchéité (16) étant disposée de manière adjacente au filetage intérieur (12) sur le côté axial placé dans le sens de vissage du filetage intérieur, **caractérisé en ce que** la première surface d'étanchéité s'étend suivant un angle (α) de 0,25° à 10,0° par rapport à un plan (22) perpendiculaire à l'axe de filetage (14) du filetage intérieur (12) de sorte que, dans la direction radiale, la surface d'étanchéité (16) est inclinée vers l'extérieur dans le sens de vissage du filetage intérieur (12).

2. Raccord (10) selon la revendication 1, la première surface d'étanchéité (16) s'étendant suivant un angle (α) de 0,5° à 5,0° par rapport à un plan (22) perpendiculaire à l'axe de filetage (14) du filetage intérieur (12).

3. Raccord (10) selon l'une des revendications 1 ou 2, la première surface d'étanchéité (16) s'étendant suivant un angle (α) de 1,0° à 3,0° par rapport à un plan (22) perpendiculaire à l'axe de filetage (14) du filetage intérieur (12).

4. Raccord (10) selon l'une des revendications 1 à 3, la première surface d'étanchéité (16) ayant un diamètre extérieur (18) de 15 mm à 50 mm et de préférence de 20 mm à 40 mm.

5. Système à capteur (100) comprenant un raccord (10) selon l'une des revendications 1 à 4 et un capteur de gaz d'échappement (30).
